# EUROPEAN PATENT APPLICATION

(11) **EP 0 593 838 A1**
(43) Date of publication of application: **27.04.1994**
(21) Application number: 92830584.6
(22) Date of filing: 23.10.1992
(51) Int. Cl.: B23P 11/00, B21D 39/04

(54) **A machine for pressing tubes, in particular the ends of rubber oleodynamic tubes for the formation of connecting pieces**

(71) Applicant: FORANTE ORAZIO & C. S.n.c. di Orazio Forante, I-37050 S. Maria di Zevio (Verona) (IT)
(72) Inventor: Forante, Graziano, I-37050 S.Maria Di Zevio (Verona) (IT)
(74) Representative: Lanzoni, Luciano

(57) **Abstract**

The invention relates to a machine for pressing tubes, in particular the ends of oleodynamic rubber tubes (11) for the formation of connecting pieces. The machine comprises a mobile structure (1) equipped with a plurality of pliers (4) arranged in a dial fashion associated to a conical surface (7) of a fixed annular element (8). The mobile structure (1) is connected to a stem (9) of a vertically mobile hydraulic jack (10). By effect of the sliding of the said pliers (4) on the said conical surface (7), due to the action of the hydraulic jack (10), the pliers (4) centripetally approach each other and squeeze the rubber tube (11) positioned at the centre of the said dial. To each of the said pliers (4) is associated at least one elastic means (16) aimed at pushing the said pliers (4) in a centrifugal direction when the stem (9) of the said hydraulic jack (10) is moved into the initial inactive position. The active movement of the stem (9) of the jack (10) occurs when it descends from an up position towards a down position and the pliers (4) are pushed in centripetal direction due to the fact that the conical surface (7) of the fixed annular element (8) is downwards-facing.

## Description

The invention relates to a machine for pressing tubes, in particular the ends of rubber oleodynamic tubes for the formation of connecting pieces.

The tubes in question are destined for oleodynamic use, for the connection, for example, of hydraulic cylinders with oleodynamic control panels or other hydraulic equipment.

For the realisation of the connections between these tubes and the said oleodynamic equipment it is necessary, as is well known, to make the connecting pieces which are substantially constituted by a slightly truncoconical steel element having a longitudinal through-hole and equipped with a screw-nut, which is inserted into the end of the rubber tube after an aluminium pipe-coupling sleeve has been positioned on the outside of the same rubber tube. The tube is then centripetally pressed at the part covered by the said pipe-coupling sleeve, which latter plastically deforms and grips the steel connecting piece inside the rubber tube. The pressing operation is performed using special pressing machines, to which field the present invention belongs.

As is known, the above machines substantially comprise a mobile structure equipped with a series of pliers (or pushing elements) arranged in a dial-fashion, and resting with one of their ends on the conical surface of a fixed annular element which externally encircles the pliers. The mobile structure is connected to the stem of a vertically mobile hydraulic jack, mobile respectively between an initial inactive position and a final active position. The movement of the stem of the jack permits, by effect of the sliding of the pliers on the conical surface, the centripetal approaching of the pliers and the consequent crushing of the aluminium sleeve which is positioned on the outside of the rubber tube, which tube is in the centre of the dial defined by the pliers.

The prior art teaches that the centripetal movement of the pliers is performed by moving the stem of the jack from an inferior position towards a superior position since the conical surface, on which the pliers slide, has its conical surface turned upwards.

As a consequence of this, extracting the pliers to substitute them is very awkward (for tubes of differing diameters pliers of different conformation are necessary). The said extraction must be effected, as is well known, by manually pulling the pliers radially towards the centre and, because of the restricted spaces and reciprocal interferences among the various organs of the machine, the said operation is not always easy to perform. Furthermore, the danger of such an operation should not be under-estimated, as the operator has to insert his hands into the pressing machine.

A further drawback of the prior art machines is constituted by the fact that after the crushing of the aluminium sleeve some of the pliers stay stuck to the sleeve due to the effect of the pressure exerted by the pliers on the plastically deformable material which constitutes the sleeve. Also in this case it is therefore necessary to intervene manually in order to detach the pliers from the sleeve and this brings about the same dangerous situation as before, with the operator's hands inside the pressing machine, not to mention the loss of time involved.

The essential aim of the present invention is thus to eliminate the above-mentioned drawbacks, relative to the prior-art machines, by providing a machine in which the automatic detachment of the pliers from the sleeve positioned on the rubber tube is guaranteed at the end of the pressing operation, and which is structured in such a way as to ease the substitution of the pliers without there arising the necessity for the operator to insert his hands into the machine.

A further aim of the present invention is to realise a relatively simple machine from a constructional point of view, and one which is extremely reliable from the operative point of view.

These and other aims besides are all attained by the present pressing machine for tubes, in particular the ends of rubber oleodynamic connecting tubes for the formation of connecting pieces, whose characteristics are indicated in the claims which follow.

Further advantages and characteristics of the present invention will better emerge from the detailed description that follows; made with reference to the accompanying drawings, which represent a preferred embodiment here illustrated in the form of a non-limiting example, and in which:

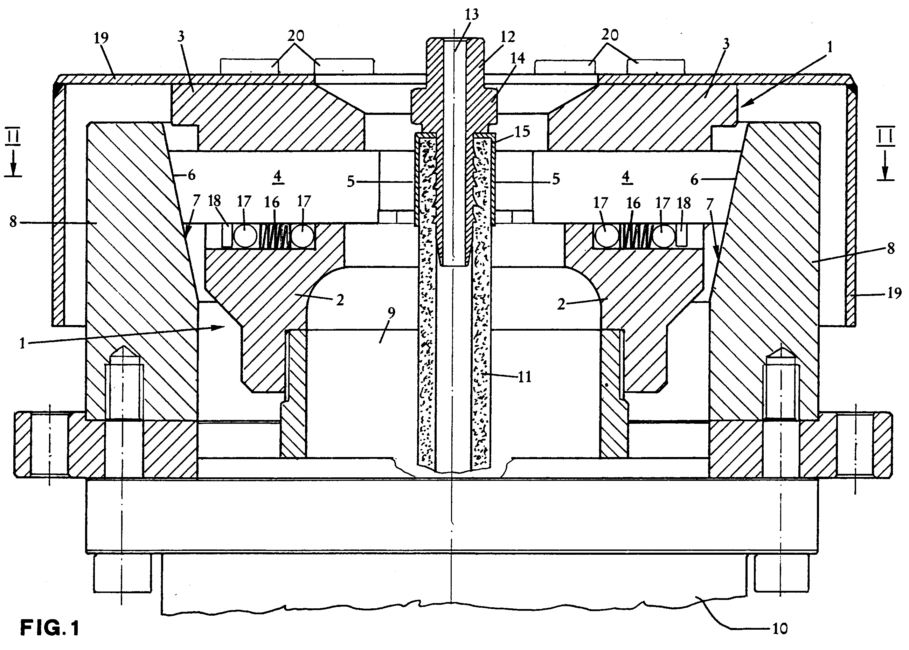

- Figure 1 shows a schematic view in section of the part of the machine where the rubber tube-pressing operation takes place:

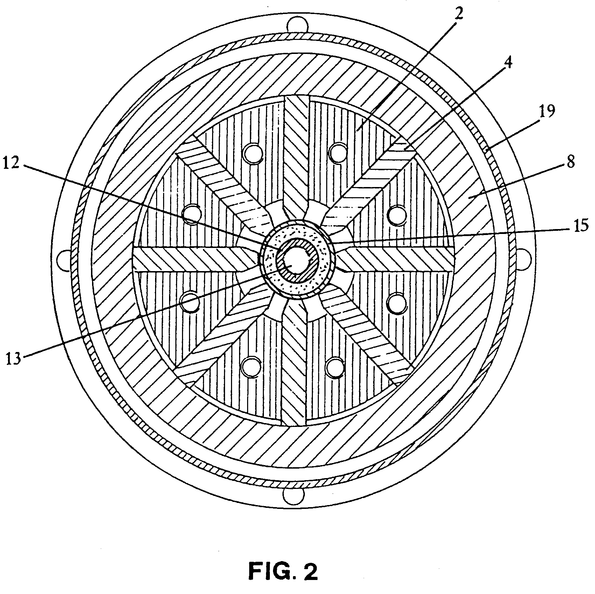

- Figure 2 shows a schematic section made along line II-II of figure 1.

With reference to the figures, 1 denotes a mobile structure, approximately cylindrical and with a hole at its centre. It is composed of a lower part 2, called a plier-bearing cusp, and an upper part 3, consituted by a plier-holding flange which is fixed to the underlying cusp 2 by means of bolts 20.

The mobile structure 1 is equipped with a series of pliers ( or pushing elements) 4 (illustrated in the example in a totality of eight), arranged in a dial-fashion, each formed by a steel sliding element equipped with a frontal part 5 and an inclined posterior part 6 which rests on the conical surface 7, having its conical part facing downwards, of a fixed annular element 8.

The plier-bearing cusp 2 is screwed on the stem 9 of a hydraulic jack 10. The stem 9 is vertically mobile respectively from an initial inactive position, which corresponds to its raised position, to a final active position, which corresponds to its lowered position.

The lowering of the stem 9 enables, by effect of the sliding of the pliers 4 on the conical surface 7, the centripetal approaching of the frontal parts 5 of the pliers 4.

The said pliers 4 then radially compress the upper end of a rubber tube 11 positioned at the centre of the dial defined by the pliers 4.

A connecting element 12 is inserted into the rubber tube 11, which connecting element 12 is formed of an approximately truncoconical steel element equipped with a through-hole 13 and equipped with a screw-nut 14.

An aluminium sleeve 15 is positioned on the outside of the rubber tube 11, which sleeve 15, when it is compressed by the pliers 4 deforms plastically, squeezing against the connecting element 12 inside the rubber tube 11 so that the said connecting element 12 is firmly gripped.

A helix spring 16 is associated to each of the pliers 4, which helix spring 16 is housed inside a seating bored in the cusp 2. The helix spring 16 is interpositioned between two ball bearings 17 on one of which a pin 18 solid to the pliers 4 acts.

When the stem 9 descends, the helix spring 16 is compressed by action of the pin 18. During the rising of the stem 9 the helix spring 16 pushes the pliers 4 in a radial centrifugal direction, detaching them from the sleeve 15 which has been plastically deformed by the pliers 4.

This thus permits of avoiding dangerous manual interventions to effect the detachment of the pliers 4 from the sleeve 15.

It should also be noted that the conical surface turned downwards of the conical surface 7 permits, when the stem 9 is completely raised, of extracting the pliers 4 with great simplicity, simply by sliding them radially towards the outside.

Obviously, before such an operation, it will be necessary to remove the protection case 19 which covers the mobile structure 1 and the external part of the fixed annular element 8.

## Claims

1. A machine for pressing tubes (11), in particular the ends of rubber oleodynamic tubes for the formation of connecting pieces, comprising a mobile structure (1) equipped with a plurality of pliers (4) arranged in a dial fashion associated to a conical surface (7) of a fixed annular element (8), being connected to a stem (9) of a hydraulic jack (10), the said hydraulic jack (10) being vertically mobile respectively between an initial inactive position and a final active position, the moving of the said stem (9) permitting, by effect of the sliding of the said pliers (4) on the said conical surface (7), of the centripetal reciprocal approaching of the said pliers (4) and the consequent squeezing of a rubber tube (11) equipped with a plastically deformable sleeve (15) on the part of the rubber tube (11) wherein the squeezing is performed, characterised by the fact that to each of the said pliers (4) is associated at least one elastic means (16) aimed at pushing the said pliers (4) in a centrifugal direction when the stem (9) of the said hydraulic jack (10) is brought into the said initial inactive position.

2. A machine as in claim 1, characterised by the fact that the said elastic means is constituted by a helix spring (16) housed inside a seating bored in the said mobile structure (1) on which a pin (18) solid to the said pliers (4) acts.

3. A machine as in claim 1, characterised by the fact that the said conical surface (7) is downturned and that the said initial inactive position of the said stem (9) of the said hydraulic jack (10) corresponds to its raised position and that the said final active position of the stem (9) of the said hydraulic jack (10) corresponds to its lowered position.

4. A machine as in claim 1, characterised by the fact that a protection case (19) is fixed to the said mobile structure (1), which protection case (19) covers the said mobile structure (1) and the said fixed annular element (8) external part.
